# EUROPÄISCHE PATENTSCHRIFT

(11) **EP 3 055 231 B1**
(45) Veröffentlichungstag und Bekanntmachung des Hinweises auf die Patenterteilung: **31.05.2017**
(21) Anmeldenummer: 14747631.1
(22) Anmeldetag: 04.08.2014
(51) Int. Cl.: B65G 15/38, F27B 9/24

(54) **TASCHENFÖRDERGURT MIT HOHER FLEXIBILITÄT UND GLEICHZEITIGER HOHER FLAMMWIDRIGKEIT**
BAG CONVEYOR BELT HAVING GOOD FLEXIBILITY AND ALSO GOOD FLAME RESISTANCE
COURROIE TRANSPORTEUSE EN TUBE À HAUTE FLEXIBILITÉ ET EN MÊME TEMPS À HAUTE PROPRIÉTÉ IGNIFUGE

(30) Priorität: 10.10.2013 DE 102013111190
(43) Veröffentlichungstag der Anmeldung: 17.08.2016
(73) Patentinhaber: ContiTech Transportbandsysteme GmbH, 30165 Hannover (DE)
(72) Erfinder: MÜLLER, Georg, 50678 Köln (DE); VAZQUEZ-MAGGIO, Daniel, 90419 Nürnberg (DE)
(74) Vertreter: Finger, Karsten
(86) Internationale Anmeldenummer: PCT/EP2014/066672
(87) Internationale Veröffentlichungsnummer: WO 2015/051935

(56) Entgegenhaltungen:
- WO-A1-89/12593
- WO-A1-2010/031692
- WO-A1-2011/110220
- DE-A1- 3 329 848
- DE-A1- 4 014 850
- US-A1- 2009 233 746
- US-A1- 2010 044 189

## Beschreibung

Die Erfindung betrifft einen Taschenfördergurt, mit einer ersten Schicht, die ein Material mit einer hohen Flexibilität aufweist, sowie eine Taschenförderanlage, mit einem derartigen Fördergurt.

Auf dem Gebiet der Fördertechnik sind u.a. Taschenfördergurte bekannt, die auch als Taschenförderer oder im Englischen als Bag Conveyor bezeichnet werden oder unter der Markenbezeichnung Sicon®-Gurte bekannt sind. Die Bezeichnung resultiert aus dem Aufbau des Fördergurtes, der zu einer Schlaufe oder Tasche gefaltet sein Fördergut geschlossen transportiert. Die Gurtenden weisen Profile mit einvulkanisierten Festigkeitsträgern wie z.Z. Stahlseilen auf und dienen zur Führung des Gurtes mittels der Führungs- und Stützrollen. Die Festigkeitsträger übernehmen die Gurtzugkräfte. Sie sind in einer vertikalen Achse übereinander angeordnet. Der förderguttragende Mittelteil des Taschenfördergurtes ist aus hoch elastischem Gummi sowie frei von Festigkeitsträgern und sonstigen Versteifungselementen.

Aufgrund dieser Konstruktion des Taschenfördergurtes und der entsprechenden Anlagentechnik werden enge Kurvenradien ermöglicht, dadurch Übergabestationen vermieden und der Taschenfördergurt kann das Fördergut von der Aufgabe- bis zur Abwurfstelle geschlossen transportieren. Dies vermeidet eine Belastung der Umwelt durch das Fördergut z.B. durch Staub, Rieselgut etc. sowie schützt umgekehrt das Fördergut vor Umwelteinflüssen wie z.B. Wind, Regen, Sonneneinstrahlung etc. Auch im Rücktrum ist der Gurt geschlossen. Die in der vertikalen Achse übereinander angeordneten Festigkeitsträger sorgen dafür, dass sie selbst in Kurven bis 180° immer den gleichen Radius aufweisen. Durch diese Eigenschaften wird ein hochdynamisches Fördersystem geschaffen, welches enge Radien, hohe Steigungen und hohe Beschleunigungen ermöglicht, z.B. für den Einsatz auf engem Raum wie in Fabriken, Schiffen, Stahlwerken etc. Beispiele für derartige gattungsgemässen Taschenfördergurte bzw. Taschenförderanlagen zeigen z.B. die WO 89/12593 und EP 0 765 287 B1.

Aus diesen Eigenschaften des Fördersystems ergeben sich jedoch auch entsprechende Anforderungen an die dynamischen Eigenschaften des entsprechenden Taschenfördergurtes hinsichtlich seines Aufbaus bzw. seiner Materialien. So ist der Taschenfördergurt derart zu gestalten, dass er den dynamischen Anforderungen durch Beschleunigung und Abbremsen sowie Knicken und Stauchen möglichst lange unbeschadet standhält, da der Ausfall einer Förderanlage zu großen Problemen und Kosten führt ebenso wie der Austausch eines Fördergurtes, der über die gesamte Länge der Förderanlage vorgenommen werden muss. Hierbei haben Langzeitbelastungsversuche gezeigt, dass durch die dynamischen Belastungen, insbesondere durch das Knicken und Stauchen des Fördergurtes durch das Öffnen und Schließen beim Be- und Entladen, Beschädigungen in Form von Mikrorissen an der Oberfläche des Taschenfördergurtes entstehen und sich dann in die Tiefe des Gurtmaterials fortpflanzen. Diese Mikrorisse entstehen insbesondere an der Knickstelle des Taschenfördergurtes, d.h. an der tiefsten Stelle der Schlaufe, die die größte Gewichtsbelastung durch das Fördergut trägt und durch das Öffnen und Schließen des Fördergurtes am stärksten belastet wird, und treten eher an der Außenseite des Taschenfördergurtes auf, d.h. an der dem Fördergut abgewandten Seite.

Um diesen dynamischen Anforderungen gerecht zu werden, werden für Taschenfördergurte in der Regel Kautschuke wie z.B. Butyl- oder Nitril- oder Chloprenkautschukmischungen verwendet. Zusätzlich enthalten diese Kautschukmischungen oft noch 10 und 60 phr Weichmacher.

Neben den dynamischen Anforderungen können sich jedoch gleichzeitig weitere Anforderungen an Taschenfördergurte ergeben wie z.B. eine bestimmte Flammwidrigkeit, die z.B. beim Einsatz Untertage aus Sicherheitsgründen vorgeschrieben sein kann.

Hinsichtlich der Flammwidrigkeit sind besonders Chloropren- oder Styrolkautschukmischungen gut geeignet.

Die DE 10 2009 043 904 A1 beschreibt einen Muldenfördergurt mit einer vulkanisierbaren Kautschukmischung auf Basis von u.a. Chloropren-Kautschuk (CR), der sich durch seine hohe Flamm-, Witterungs- und Alterungsbeständigkeit auszeichnet, insbesondere für Fördergurte mit Einsatz im Untertagebau.

Die CN 202642653 U beschreibt einen Schlauchfördergurt für den Untertagebau von Kohleminen mit einer Aramid-Strukturschicht, die zwischen einer oberen flammwidrigen Haftschicht und einer unteren flammwidrigen Haftschicht angeordnet ist.

Die CN 102642693 A beschreibt einen flammwidrigen Schlauchfördergurt für Kohleminen mit einer Gerüstschicht, die zwischen einer oberen flammwidrigen Haftschicht und einer unteren flammwidrigen Haftschicht angeordnet ist.

Diesen flammwidrigen Mulden- und Schlauchfördergurten ist dabei gemein, dass diese Arten von Fördergurten im Vergleich zu Taschenfördergurten deutlich geringeren dynamischen Belastungen ausgesetzt sind, weil die Gurtzugkräfte durch in Längsrichtung, d.h. in Förder- bzw. Laufrichtung verlaufende Festigkeitsträger übertragen werden, die i.Allg. über die Breite des Fördergurtes verteilt angeordnet sind. Durch diesen Aufbau bedingt ergeben sich für Mulde- und Schlauchfördergurte geringere Steigungen, Kurvenradien und Beschleunigungen als für Taschenfördergurte, so dass zum einen keine Materialien verwendet werden müssen, die dynamischen Anforderungen wie bei Taschenfördergurten genügen, und zum anderen flammwidrige Materialien wie zuvor beschrieben verwendet werden können. Da flammwidrige Materialien aufgrund ihres vergleichsweise hohen Füllstoffgehaltes jedoch nicht die notwendige Flexibilität aufweisen, um den dynamischen Anforderungen eines Taschenfördergurtes zu genügen, lassen sich diese Materialien nicht von den flammwidrigen Mulden- und Schlauchfördergurten auf Taschenfördergurte übertragen.

Eine Aufgabe der vorliegenden Erfindung ist es daher, einen Taschenfördergurt der eingangs beschriebenen Art bereit zu stellen, der sowohl hohen dynamischen Anforderungen genügt als auch flammwidrig ist. Insbesondere sollen Rissbildungen durch dynamische Belastungen auf den Oberflächen des Fördergurtes bei gleichzeitiger Flammwidrigkeit vermieden werden.

Die Aufgabe wird erfindungsgemäß durch einen Taschenfördergurt mit den Merkmalen gemäß Anspruch 1 sowie eine Taschenförderanlage mit den Merkmalen gemäß Anspruch 10 gelöst.

Vorteilhafte Weiterbildungen sind in den Unteransprüchen beschrieben.

Somit betrifft die vorliegende Erfindung einen Taschenfördergurt, mit einer ersten Schicht, die ein Material mit einer hohen Flexibilität aufweist. Der Fördergurt ist dadurch gekennzeichnet, dass er ferner eine zweite Schicht mit einem Material mit einer hohen Flammwidrigkeit aufweist.

Unter einer hohen Flexibilität ist hinsichtlich des erfindungsgemäßen Fördergurtes zu verstehen, dass dieser dynamischen Anforderungen standhält, die an Taschenfördergurte gestellt werden. Diese dynamischen Anforderungen beinhalten im Vergleich zu anderen Gurtanwendungen hohe Beschleunigung und Abbremsungen sowie ein Knicken und Stauchen, z.B. beim Be- und Entladen des Fördergurtes. Die dynamischen Anforderungen können z.B. durch einen dynamischen Biegetest erprobt werden. Dabei besteht eine Korrelation zwischen der Anzahl der Biegebeanspruchungen im Test und der Langlebigkeit der Materialmischung im Einsatz. So muss eine Platte eines Fördergurtes, die auf eine vorbestimmte Weise in den Prüfstand eingespannt wird, eine vorbestimmte Anzahl der Lastwechsel überstehen, ohne dabei einzureißen. Erfahrungen zeigen, dass falls die vorbestimmte Anzahl der Biegewechsel nicht erreicht wird, ein Versagen der Platte vor der zugesagten Garantiezeit in Abhängigkeit von der Einsatzbeanspruchung nicht auszuschließen ist. So erhält nur eine Mischung bzw. eine Platte, die diesen Test übersteht, eine Freigabe für weitere Tests. Weiterhin können z.B. 10 m lange Gurtstücke in einem Teststand überprüft werden, der eine kleine Förderanlage darstellt. Auf diesem Teststand muss der Fördergurt besonders viele Kurven beschreiben.

Ebenfalls werden das Öffnen und das Schließen des Fördergurtes überprüft. Erfahrungen haben gezeigt, dass hier ebenfalls ein Versagen der Platte bei Nichteignung schon nach kurzer Zeit zu beobachten ist.

Dabei liegt der vorliegenden Erfindung die Erkenntnis zugrunde, dass bei Fördergurten für dynamische Belastungen bisher entsprechend flexible Materialien eingesetzt werden, die jedoch nur eine geringe Flammwidrigkeit aufweisen. Soll diese bei Fördergurten erreicht werden, so werden bisher flammwidrige Materialien für die äußeren Schichten, d.h. Oberflächen des Fördergurtes verwendet. Dies widerspricht jedoch der Aufgabe, einen Fördergurt für dynamische Anwendungen flammwidrig zu gestalten, weil die Flammwidrigkeit dieser Schichten durch einen hohen Füllstoffgehalt erreicht wird, dies jedoch die Flexibilität dieser Schichten reduziert.

Erfindungsgemäß werden daher zwei getrennte Schichten gewählt, nämlich eine erste hochflexible Schicht und eine zweite flammwidrige Schicht, deren Eigenschaften jeweils durch die geeigneten Materialien geschaffen und eingestellt werden können. Durch die Kombination dieser beiden Schichten zu einem Fördergurt können dann diese Eigenschaften gleichzeitig bei einem Fördergurt genutzt werden, der als Taschenfördergurt eingesetzt werden kann.

Vorzugsweise ist die erste Schicht der Laufseite des Fördergurtes und die zweite Schicht der Tragseite des Fördergurtes zugewandt. Da Fördergurte allgemein und insbesondere Taschenfördergurte zum Fördergut hin, d.h. zur Tragseite hin eingeknickt oder gemuldet werden, treten an der Außenseite, d.h. der Laufseite des Fördergurtes auch höhere dynamischen Belastungen auf als an der Tragseite. Daher ist es vorteilhaft, die erste flexible Schicht auch an der Laufseite des Fördergurtes vorzusehen.

Vorzugsweise weist der Fördergurt ferner eine dritte Schicht mit einem Material mit einer hohen Flexibilität auf. Durch diese weitere flexible Schicht kann die Flexibilität des Fördergurtes insgesamt weiter erhöht werden.

Vorzugsweise sind die erste Schicht und die dritte Schicht durch die zweite Schicht zueinander beabstandet. Mit anderen Worten ist die zweite flammwidrige Schicht wie bei einem Sandwich zwischen den beiden flexiblen Schichten eingebettet. Dies ist vorteilhaft, weil die dynamischen Belastungen außen größer sind als im Kern des Fördergurtes und daher die flexiblen Schichten auch auf beiden Seiten des flammwidrigen Kerns vorgesehen werden können, um diesen dynamischen Belastungen gerecht zu werden.

Vorzugsweise weist die dritte Schicht das gleiche Material wie die erste Schicht oder ein anderes Material als die erste Schicht auf. Werden die gleichen Materialien verwendet, so können hierdurch Kosten reduziert werden, weil nur ein Material eingekauft, gelagert und verwendet wird. Insbesondere wird der Herstellungsprozess vereinfacht, weil nur eine Materialsorte für beide Seiten des flammwidrigen Kerns gehandhabt werden muss. Werden unterschiedliche Materialien verwendet, so kann die Flexibilität jeder Schicht unterschiedlich eingestellt werden. Ferner können die Eigenschaften der Schichten insgesamt unterschiedlich beeinflusst und auf verschiedene Anwendungsfälle abgestimmt werden.

Vorzugsweise bildet die erste Schicht die Laufseite des Fördergurtes und bzw. oder die dritte Schicht die Tragseite des Fördergurtes. Vorteilhaft ist dabei, dass die flexiblen Schichten hierdurch die äußeren Schichten bilden können, die auch den höchsten dynamischen Belastungen ausgesetzt werden.

Vorzugsweise weist die zweite Schicht eine Stärke von 4 mm bis 15 mm und bzw. oder die erste Schicht und bzw. oder die dritte Schicht eine Stärke von 0,1 mm bis 10 mm auf. In diesen Bereichen der Stärke der Schichten können diese ihre jeweiligen Eigenschaften bei üblichen Anwendungsfällen wirkungsvoll zur Anwendung bringen. Die Stärke der gesamten Platte des Fördergurtes liegt dabei vorzugsweise zwischen 4,2 mm und 35 mm. Derartige Fördergurte haben im Allgemeinen eine Breite zwischen 0,5 m und 5,0 m und können mit Längen bis zu 10.000 m eingesetzt werden.

Vorzugsweise weist das Material der zweiten Schicht brandhemmende Verbindungen auf. Beispielsweise können hierfür halogenierte Kohlenwasserstoffe, Hydroxide, Silikate, spezielle Graphite oder Metalloxide eingesetzt werden. Hierbei können besonders ZnO, MgO, Sb1-2O1-3, A1(OH)3, teilweise oder vollständig hydrierte Silikate zum Einsatz kommen. Vor allem durch den Einsatz von Metalloxiden oder -hydroxiden kann die Verwendung von halogenierten Verbindungen auf ein Minimum begrenzt oder komplett überflüssig werden. Dies ist sinnvoll, da der Einsatz von halogenierten Kohlenwasserstoffen aus umweltschutzgründen minimiert werden soll. Zudem sind die Metalloxide einfacher herzustellen. Dies verringert gleichzeitig die Kosten. Desweiteren muss die Mischung aufgrund der niedrigeren dynamischen Anforderungen im Vergleich zur ersten und bzw. oder dritten Schicht keine halogenierten Weichmacher mehr enthalten. Hier sind die gleichen Vorteile vorhanden.

Vorzugsweise weist das Material der ersten Schicht und bzw. oder der dritten Schicht nicht-halogenierte Weichmacher auf. Aufgrund der dünnen ersten und bzw. oder dritten Schicht müssen diese in erster Linie die dynamischen Anforderungen erfüllen. Die brandtechnischen Anforderungen werden überwiegend bis ausschließlich durch die zweite Schicht realisiert. Dies ermöglich es, teure, flammwidrige halogenierte Weichmacher durch nicht-halogenierte Weichmacher teilweise oder vollständig zu ersetzen. Die entsprechenden Vorteile wurden bereits ausgeführt. Somit können in der ersten und bzw. oder dritten Schicht eine SBR-, NR-, CR-, NBR-, Butyl- oder Butadien-Kautschukmischung eingesetzt werden. Hierbei wird bevorzugt eine weichmacherhaltige, flammgeschützte CR-Kautschukmischung eingesetzt.

Gemäß einem weiteren Aspekt der vorliegenden Erfindung betrifft diese auch eine Taschenförderanlage, mit einer Mehrzahl von Führungs- und bzw. oder Stützrollen und einem Fördergurt wie zuvor beschrieben.

Ein Ausführungsbeispiel und weitere Vorteile der Erfindung werden nachstehend im Zusammenhang mit den folgenden Figuren erläutert. Darin zeigt:
- Fig. 1: eine schematische Schnittdarstellung eines Fördergurtes; und
- Fig. 2: eine perspektivische schematische Darstellung eines Taschenfördergurtes.

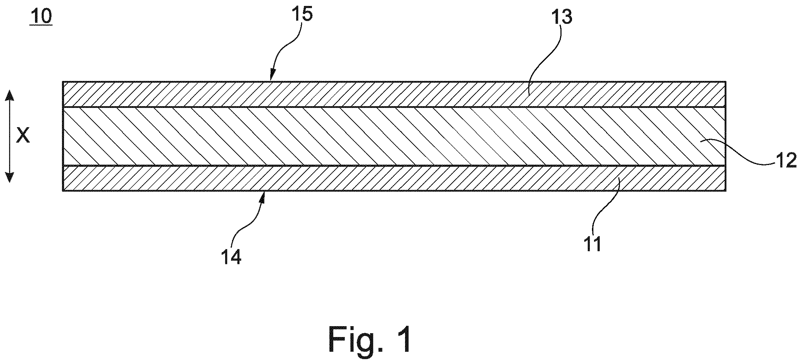

Fig. 1 zeigt eine schematische Schnittdarstellung eines Fördergurtes 10. Der Fördergurt 10 weist eine erste Schicht 11 auf, die gleichzeitig die Laufseite 14 des Fördergurtes 10 bildet. Der Fördergurt 10 weist ferner eine zweite Schicht 12 auf, die der Tragseite 15 zugewandt auf der ersten Schicht 11 angeordnet ist. Auf der zweiten Schicht 12 ist eine dritte Schicht 13 angeordnet, die gleichzeitig die Tragseite 15 des Fördergurtes 10 bildet. Dieser Aufbau der Schichten 11, 12, 13 erstreckt sich in der Richtung X der Stärke bzw. Dicke des Fördergurtes.

Die erste und dritte Schicht 11, 13 weisen ein Material mit einer hohen Flexibilität und die dazwischen eingebettete zweite Schicht 12 eine hohe Flammwidrigkeit auf. Hierdurch wird erreicht, dass ein flammwidriger Fördergurt 10 geschaffen werden kann, der durch die äußeren flexiblen Schichten 11, 13 gleichzeitig insgesamt eine vergleichsweise hohe Flexibilität aufweist, weil die äußeren Schichten 11, 13 auch höheren dynamischen Belastungen ausgesetzt werden.

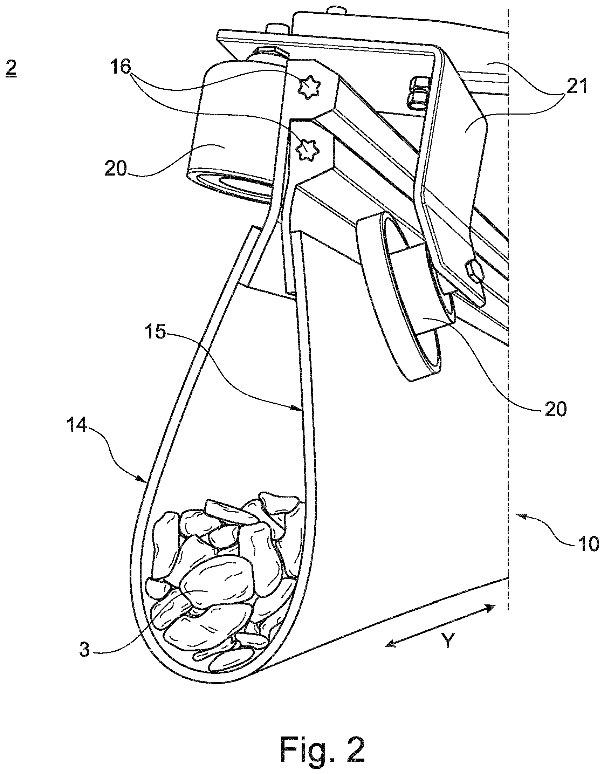

Fig. 2 zeigt eine perspektivische schematische Darstellung eines Taschenfördergurtes 10. Der Fördergurt 10 gemäß der Fig. 1 ist aufgrund seiner trotz erhöhter Flammwidrigkeit hohen Flexibilität sehr geeignet, als Taschenfördergurt 10 eingesetzt zu werden. In diesem Anwendungsfall der Fig. 2 weist der Taschenfördergurt 10 an seinen Kanten jeweils einen Festigkeitsträger 16 in Form eines Stahlseils 16 auf. Über diese Kanten läuft der Taschenfördergurt 16 über Führungs- und bzw. oder Stützrollen 21 einer Taschenförderanlage 2. Die Führungs- und bzw. oder Stützrollen 21 werden durch Anlagenteile 21 gehalten und positioniert. Im beladenen Zustand trägt der Taschenfördergurt 10 in seinem Inneren auf der Tragseite 15 Fördergut 3. Dieses wird in der Taschenförderanlage 2 in Förderrichtung Y, die der Laufrichtung Y des Taschenfördergurtes 10 entspricht, transportiert. Diese Richtung entspricht auch der Längsrichtung Y des Taschenfördergurtes 10.

Im zur Taschenform zusammengeknickten Zustand des geschlossenen Taschenfördergurtes 10 erfährt der tiefste Punkt des Querschnittes des Taschenfördergurtes 10 die höchste Umformung und damit auch die höchste dynamische Belastung durch das Öffnen und Schließen des Taschenfördergurtes 10. Diese wird im beladenen Zustand durch das Gewicht des Fördergutes 3 und die hierdurch stärkere Knickung noch erhöht. Dadurch kommt es an dieser Stelle, d.h. dem tiefsten Punkt des Querschnittes, an der Laufseite 14 zuerst zu im Wesentlichen in Längsrichtung Y verlaufenden Rissen, die sich bei zunehmendem Gebrauch des Taschenfördergurtes 10 in die Tiefe der Schichten 11, 12, 13 fortpflanzen und schließlich zum Durchriss des Taschenfördergurtes 10 führen können. Daher ist es vorteilhaft, den Aufbau eines Fördergurtes 10 beim Anwendungsfall einer Taschenförderanlage 2 einzusetzen, da hierdurch die Rissbildung bei gleichzeitiger Flammwidrigkeit des Taschenfördergurtes 10 reduziert werden kann.

### Bezugszeichenliste

### (Teil der Beschreibung)

- X: Stärke, Dicke des Fördergurtes 10 bzw. der Schichten 11, 12, 13
- Y: Längsrichtung, Förderrichtung, Laufrichtung des Fördergurtes 10

- 10: Fördergurt, Taschenfördergurt
- 11: ersten Schicht des Fördergurtes 10
- 12: zweiten Schicht des Fördergurtes 10
- 13: dritten Schicht des Fördergurtes 10
- 14: Laufseite des Fördergurtes 10
- 15: Tragseite des Fördergurtes 10
- 16: Festigkeitsträger
- 2: Förderanlage, Taschenförderanlage
- 20: Führungs- und/oder Stützrollen
- 21: Anlagenteile
- 3: Fördergut

## Patentansprüche

1. Taschenfördergurt (10), mit
einer ersten Schicht (11), die ein Material mit einer hohen Flexibilität aufweist, **dadurch gekennzeichnet, dass**
der Fördergurt (10) ferner eine zweite Schicht (12) mit einem Material mit einer hohen Flammwidrigkeit aufweist.

2. Taschenfördergurt (10) nach Anspruch 1,
wobei die erste Schicht (11) der Laufseite (14) des Fördergurtes (10) zugewandt ist, und
wobei die zweite Schicht (12) der Tragseite (15) des Fördergurtes (10) zugewandt ist.

3. Taschenfördergurt (10) nach Anspruch 1 oder 2,
ferner mit einer dritten Schicht (13), die ein Material mit einer hohen Flexibilität aufweist.

4. Taschenfördergurt (10) nach Anspruch 3,
wobei die erste Schicht (11) und die dritte Schicht (13) durch die zweite Schicht (12) zueinander beabstandet sind.

5. Taschenfördergurt (10) nach Anspruch 3 oder 4,
wobei die dritte Schicht (13) das gleiche Material wie die erste Schicht (11) aufweist, oder
wobei die dritte Schicht (13) ein anderes Material als die erste Schicht (11) aufweist.

6. Taschenfördergurt (10) nach einem der vorherigen Ansprüche,
wobei die erste Schicht (11) die Laufseite (14) des Fördergurtes (10) bildet, und/oder wobei die dritte Schicht (13) die Tragseite (15) des Fördergurtes (10) bildet.

7. Taschenfördergurt (10) nach einem der vorherigen Ansprüche,
wobei die zweite Schicht (12) eine Stärke von 4 mm bis 15 mm aufweist, und/oder wobei die erste Schicht (11) und/oder die dritte Schicht (13) eine Stärke von 0,1 mm bis 10 mm aufweist.

8. Taschenfördergurt (10) nach einem der vorherigen Ansprüche,
wobei das Material der zweiten Schicht (12) brandhemmende Verbindungen aufweist.

9. Taschenfördergurt (10) nach einem der vorherigen Ansprüche,
wobei das Material der ersten Schicht (11) und/oder der dritten Schicht (13) nicht-halogenierte Weichmacher aufweist.

10. Taschenförderanlage (2), mit
einer Mehrzahl von Führungs- und/oder Stützrollen (20), und
einem Taschenfördergurt (10) nach einem der vorherigen Ansprüche.

## Claims

1. Pouch conveyor belt (10), with
a first layer (11), which comprises a material with high flexibility,
**characterized in that**
the conveyor belt (10) also has a second layer (12) comprising a material with a high flame resistance.

2. Pouch conveyor belt (10) according to Claim 1,
the first layer (11) facing the running side (14) of the conveyor belt (10), and
the second layer (12) facing the carrying side (15) of the conveyor belt (10).

3. Pouch conveyor belt (10) according to Claim 1 or 2, also with a third layer (13), which comprises a material with high flexibility.

4. Pouch conveyor belt (10) according to Claim 3,
the first layer (11) and the third layer (13) being spaced apart from one another by the second layer (12).

5. Pouch conveyor belt (10) according to Claim 3 or 4, the third layer (13) comprising the same material as the first layer (11), or
the third layer (13) comprising a different material than the first layer (11).

6. Pouch conveyor belt (10) according to one of the preceding claims,
the first layer (11) forming the running side (14) of the conveyor belt (10), and/or
the third layer (13) forming the carrying side (15) of the conveyor belt (10).

7. Pouch conveyor belt (10) according to one of the preceding claims,
the second layer (12) having a thickness of 4 mm to 15 mm, and/or
the first layer (11) and/or the third layer (13) having a thickness of 0.1 mm to 10 mm.

8. Pouch conveyor belt (10) according to one of the preceding claims,
the material of the second layer (12) comprising fire-resistant compounds.

9. Pouch conveyor belt (10) according to one of the preceding claims,
the material of the first layer (11) and/or the third layer (13) comprising non-halogenated plasticizers.

10. Pouch conveying installation (2), with
a plurality of guide and/or support rollers (20), and a pouch conveyor belt (10) according to one of the preceding claims.

## Revendications

1. Courroie transporteuse en tube (10), avec une première couche (11), qui présente un matériau à haute flexibilité, **caractérisée en ce que** la courroie transporteuse (10) présente en outre une deuxième couche (12) avec un matériau à haute résistance à la propagation du feu.

2. Courroie transporteuse en tube (10) selon la revendication 1, dans laquelle la première couche (11) est tournée vers la face de roulement (14) de la courroie transporteuse (10), et dans laquelle la deuxième couche (12) est tournée vers la face portante (15) de la courroie transporteuse (10).

3. Courroie transporteuse en tube (10) selon la revendication 1 ou 2, avec en outre une troisième couche (13), qui présente un matériau à haute flexibilité.

4. Courroie transporteuse (10) selon la revendication 3, dans laquelle la première couche (11) et la troisième couche (13) sont espacées l'une de l'autre par la deuxième couche (12).

5. Courroie transporteuse en tube (10) selon la revendication 3 ou 4, dans laquelle la troisième couche (13) présente le même matériau que la première couche (11), ou dans laquelle la troisième couche (13) présente un autre matériau que la première couche (11).

6. Courroie transporteuse en tube (10) selon l'une quelconque des revendications précédentes, dans laquelle la première couche (11) forme la face de roulement (14) de la courroie transporteuse (10), et/ou dans laquelle la troisième couche (13) forme la face portante (15) de la courroie transporteuse (10).

7. Courroie transporteuse en tube (10) selon l'une quelconque des revendications précédentes, dans laquelle la deuxième couche (12) présente une épaisseur de 4 mm à 15 mm, et/ou dans laquelle la première couche (11) et/ou la troisième couche (13) présente(nt) une épaisseur de 0,1 mm à 10 mm.

8. Courroie transporteuse en tube (10) selon l'une quelconque des revendications précédentes, dans laquelle le matériau de la deuxième couche (12) présente des composés ignifugeants.

9. Courroie transporteuse en tube (10) selon l'une quelconque des revendications précédentes, dans laquelle le matériau de la première couche (11) et/ou de la troisième couche (13) présente des plastifiants non halogénés.

10. Installation de transport en tube (2), avec une multiplicité de rouleaux de guidage et/ou d'appui (20), et une courroie transporteuse en tube (10) selon l'une quelconque des revendications précédentes.
